# EUROPÄISCHE PATENTSCHRIFT

(11) **EP 3 608 480 B1**
(45) Veröffentlichungstag und Bekanntmachung des Hinweises auf die Patenterteilung: **04.10.2023**
(21) Anmeldenummer: 18187746.5
(22) Anmeldetag: 07.08.2018
(51) Int. Cl.: E04B 1/68, E04B 1/94

(54) **DICHTBANDROLLE AUS EINEM DICHTBAND MIT INNENLIEGENDER SPERRSCHICHT IN FUNKTIONSRICHTUNG**
SEALING TAPE ROLL MADE FROM A SEALING TAPE WITH AN INNER BARRIER LAYER IN FUNCTIONAL DIRECTION
ROULEAU DE BANDE D'ÉTANCHÉITÉ D'UNE BANDE D'ÉTANCHÉITÉ DOTÉE D'UNE COUCHE BARRIÈRE INTERNE DANS UNE DIRECTION DE FONCTIONNEMENT

(43) Veröffentlichungstag der Anmeldung: 12.02.2020
(73) Patentinhaber: ISO-Chemie GmbH, 73431 Aalen (DE)
(72) Erfinder:
(74) Vertreter: Wächter, Jochen

(56) Entgegenhaltungen:
- EP-A1- 1 118 727
- DE-A1-102009 044 558
- DE-U1- 8 715 428
- DE-U1-202012 101 990
- DE-U1-202012 104 826

## Beschreibung

Die vorliegende Erfindung betrifft eine Dichtbandrolle aus einem Dichtband aus weichem, komprimierbarem Schaumstoff mit zumindest einer innenliegenden Sperrschicht. Dichtbänder werden zum Abdichten von Fugen zwischen einem Rahmenprofil, z. B. eines Fensters oder einer Tür, und einer Gebäudewand verwendet, um die Fugen gegen Luftzug und Schlagregen abzudichten. Üblicherweise sind solche Dichtbänder zur platzsparenden Lagerung, zum Transport und zur besseren Handhabung während der Montage komprimiert zu Dichtbandrollen aufgewickelt. Neben der Luftdurchlässigkeit und der Schlagregendichtheit kommt dem Wasserdampfdiffusionswiderstand des Dichtbands als eine der wesentlichen Dichtbandeigenschaften besondere Bedeutung zu. Allgemein wird die Wasserdampfdiffusion in Funktionsrichtung des Dichtbands, also zwischen einer Rauminnenseite und einer Raumaußenseite der abzudichtenden Fuge berücksichtigt, um ein Diffusionsgefälle zwischen der Rauminnenseite und der Raumaußenseite einzustellen. Zur Beeinflussung der Wasserdampfdiffusion durch das Dichtband wurde auf zumindest einer der Seitenflanken des Dichtbands oder parallel zu diesen innerhalb des Dichtbands zumindest eine Sperrschicht vorgesehen, die sich im Einbauzustand des Dichtbands über den gesamten Fugenquerschnitt zwischen Rahmenprofil und Gebäudewand erstreckt. Eine solche Sperrschicht weist gegenüber dem Schaumstoff des Dichtbands einen erhöhten Wasserdampfdiffusionswiderstand auf und ist dadurch geeignet, die Wasserdampfdiffusion durch das Dichtband zu reduzieren bzw. ein Diffusionsgefälle zwischen der Rauminnenseite und der Raumaußenseite einzurichten.

Es hat sich herausgestellt, dass die Wasserdampfdurchlässigkeit eines Dichtbands über größere Abschnitte des Dichtbands hinweg zu betrachten ist. Lokale Unterschiede des Wasserdampfdiffusionswiderstands des Dichtbands, wie sie z. B. schon aufgrund fertigungstechnischer Begebenheiten auftreten können, führen zu einer Wasserdampfdiffusion innerhalb des Dichtbands hin zu Bereichen geringeren Wasserdampfdiffusionswiderstands. Eine solche Diffusion innerhalb des Dichtbands führt dazu, dass die Wasserdampfdiffusion durch das Dichtband hindurch gegenüber einem vollständig homogen ausgebildeten Dichtband ungewollt hoch ist und von den vorbestimmten Sollwerten abweichen kann. Ähnliches gilt für die Luftdurchlässigkeit.

DE 10 2009 044558 A1 offenbart eine Dichtbandrolle gemäß dem Oberbegriff des Anspruchs 1.

Es ist daher die Aufgabe der vorliegenden Erfindung, ein zu einer Dichtbandrolle aufgewickeltes Dichtband mit zuverlässig einstellbarem Wasserdampfdiffusionswiderstand bereitzustellen.

Diese Aufgabe wird durch eine Dichtbandrolle nach Anspruch 1 gelöst. Bevorzugte Ausführungsformen sind Gegenstand der abhängigen Unteransprüche.

Eine erfindungsgemäße Dichtbandrolle besteht aus einem Dichtband aus weichem, komprimierbarem Schaumstoff mit zumindest einer innenliegenden Sperrschicht. Das Dichtband weist eine Oberseite, eine Unterseite und zwei die Oberseite und die Unterseite verbindende Seitenflanken, eine Längsrichtung, die parallel zur Unterseite und zu den Seitenflanken ausgerichtet ist, und eine Höhenrichtung, die senkrecht zur Unterseite ausgerichtet ist, auf. Das Dichtband ist um eine Achse, die sich quer zur Längsrichtung des Dichtbands erstreckt, zur Dichtbandrolle derart aufgewickelt, dass die Oberseite einer Windung an der Unterseite einer angrenzenden Windung der Dichtbandrolle anliegt und die Seitenflanken des Dichtbands Stirnflächen der Dichtbandrolle bilden. Eine Breite der Dichtbandrolle ist als der Abstand einer Stirnfläche von der gegenüberliegenden Stirnfläche der Dichtbandrolle definiert. Das Dichtband weist eine Mehrzahl von Schaumstofflagen auf, die in Höhenrichtung zwischen der Unterseite und der Oberseite des Dichtbands übereinander angeordnet sind, wobei zwischen jeweils zwei aneinander angrenzenden Schaumstofflagen eine Sperrschicht aufgenommen ist. Die zumindest eine Sperrschicht erstreckt sich über mindestens 50 % der Breite der Dichtbandrolle zwischen den einander gegenüberliegenden Stirnflächen der Dichtbandrolle sowie in Längsrichtung des Dichtbands.

Auf diese Weise wird ein auf eine Dichtbandrolle aufgewickeltes Dichtband bereitgestellt, bei dem die zumindest eine Sperrschicht im Wesentlichen eine Wasserdampfdiffusion innerhalb des Dichtbands quer zu einer Funktionsrichtung beeinflusst. Im Gegensatz zu herkömmlichen Dichtbändern beeinflusst die zumindest eine Sperrschicht jedoch die Wasserdampfdiffusion in Funktionsrichtung des Dichtbands gar nicht oder nur kaum.

Die Funktionsrichtung des Dichtbands ist definiert als die Richtung, in der das Dichtband eine Rauminnenseite gegenüber einer Raumaußenseite im Bereich einer Fuge dämmt und abdichtet. Dichtbandrollen werden mit ihrer radial nach außen gerichteten Mantelfläche, also mit der Unterseite des Dichtbands an einem Rahmenprofil oder der Gebäudemauer abgerollt. Die Funktionsrichtung erstreckt sich folglich senkrecht zu den Seitenflanken des Dichtbands und parallel zur Unterseite des Dichtbands von der Rauminnenseite zur Raumaußenseite. Die Funktionsrichtung ist somit senkrecht zur Längsrichtung des Dichtbands und senkrecht zu einer Höhenrichtung des Dichtbands ausgerichtet, die wiederum senkrecht zur Unterseite des Dichtbands ausgerichtet ist.

Die zumindest eine Sperrschicht unterteilt das Dichtband erfindungsgemäß folglich in zwei oder mehrere Lagen, die in Höhenrichtung übereinander angeordnet sind. Durch die zumindest eine zwischenliegende Sperrschicht ist eine Wasserdampfdiffusion zwischen diesen Lagen innerhalb des Dichtbands in Höhenrichtung und von der Funktionsrichtung des Dichtbands abweichend nur in dem Ausmaß möglich, in dem die zumindest eine Sperrschicht es gestattet. Inhomogenitäten des Schaumstoffmaterials des Dichtbands wirken sich somit allenfalls lokal begrenzt auf die Wasserdampfdurchlässigkeit des Dichtbands aus, nicht aber über die gesamte Höhe des Dichtbands.

Dichtbandrollen weisen ferner die Vorteile einer platzsparenden Lagerung, einer guten Transportierbarkeit und Handhabung der Dichtbänder auf. Das Dichtband ist dabei bevorzugt komprimiert zur Dichtbandrolle aufgewickelt. Die komprimierte Dicke der erfindungsgemäßen Dichtbandrollen beträgt weniger als 25 % der Schaumstoffausgangshöhe. In bevorzugten Ausführungsformen weist das Dichtband eine komprimierte Dicke von weniger als 20 %, noch mehr bevorzugt weniger als 15 % und/oder höher als 5 % der Schaumstoffausgangshöhe auf.

Das Dichtband weist vorzugsweise in einem expandierten Zustand einen im Wesentlichen rechteckigen Querschnitt auf, wobei eine Breite des Dichtbands zwischen den Seitenflanken des Dichtbands definiert ist, eine Höhe des Dichtbands zwischen der Oberseite und der Unterseite des Dichtbands definiert ist und eine Länge des Dichtbands in Richtung der Längsrichtung definiert ist. Die Ober- und die Unterseite bilden im Querschnitt senkrecht zur Längsrichtung Breitseiten des Dichtbands und die Seitenflanken bilden in diesem Querschnitt Schmalseiten des Dichtbands. Das Dichtband erstreckt sich wesentlich weiter in seiner Länge als in seiner Breite und seiner Höhe. Da die Seitenflanken des Dichtbands die Stirnflächen der Dichtbandrolle bilden, entspricht eine Breite der Dichtbandrolle im Wesentlichen der Breite des Dichtbands. Geringe Abweichungen können sich dadurch gegeben, dass sich die Seitenflanken im zur Dichtbandrolle aufgewickelten komprimierten Zustand geringfügig nach außen wölben. Solche Abweichungen sollen bei der Angabe des Bereichs (in [%]), über den sich die zumindest eine Sperrschicht über die Breite des Dichtbands und der Dichtbandrolle erstreckt, nicht berücksichtigt werden. Erstreckt sich die zumindest eine Sperrschicht über die gesamte Breite der Dichtbandrolle, erstreckt sie sich auch über die gesamte Breite des Dichtbands und umgekehrt.

Ein Einbauzustand des Dichtbands ist als der Zustand definiert, in dem das Dichtband in einer Fuge zwischen einem Rahmenelement, z. B. einem Fenster- oder Türrahmen, und einer Gebäudemauer angeordnet ist. Dabei erstreckt sich die Längsrichtung des Dichtbands entlang der umlaufenden Fuge und das Dichtband liegt flächig mit der Unterseite und der Oberseite an dem Rahmenelement und an der Gebäudemauer an. Eine Seitenflanke des Dichtbands ist dann der Rauminnenseite und die gegenüberliegende Seitenflanke der Raumaußenseite zugewandt. Die Funktionsrichtung erstreckt sich senkrecht zu den Seitenflanken von der Rauminnenseite zur Raumaußenseite. Die Höhenrichtung des Dichtbands erstreckt sich senkrecht zur Unterseite zwischen dem Rahmenelement und der Gebäudemauer.

Vorzugsweise erstreckt sich die zumindest eine Sperrschicht zwischen den einander gegenüberliegenden Stirnflächen der Dichtbandrolle über mindestens 75% der Breite, vorzugsweise über mindestens 90% der Breite der Dichtbandrolle. In einer bevorzugten Ausführungsform erstreckt sich die zumindest eine Sperrschicht durchgehend von einer Stirnfläche der Dichtbandrolle zur gegenüberliegenden Stirnfläche der Dichtbandrolle. Je größer der Bereich ist, über den sich die zumindest eine Sperrschicht zwischen den Stirnflächen der Dichtbandrolle und somit zwischen den Seitenflanken des Dichtbands erstreckt, desto vollständiger besser werden die in Höhenrichtung übereinander angeordneten Lagen des Dichtbands durch die zumindest eine Sperrschicht voneinander getrennt. Eine Wasserdampfdiffusion innerhalb des Dichtbands in Höhenrichtung kann dadurch zunehmend verringert werden. Insbesondere wird verhindert, dass eine Wasserdampfdiffusion um die zumindest eine Sperrschicht herum erfolgt.

Es ist eine Vielzahl verschiedener Gestaltungsformen möglich, durch die die Wasserdampfdiffusion innerhalb des Dichtbands sowie die Herstellung der Dichtbandrolle nach Bedarf beeinflusst werden können.

In einer Ausführungsform ist die zumindest eine Sperrschicht mittig zwischen den Seitenflanken angeordnet. Die zumindest eine Sperrschicht erstreckt sich nur teilweise zwischen den Seitenflanken des Dichtbands, vorzugsweise in einer Ebene senkrecht zu den Seitenflanken. Die zumindest eine Sperrschicht ist jedoch nicht bis zu den Seitenflanken ausgebildet. Vielmehr verbleibt zwischen den Seitenflanken und den diesen zugwandten Rändern der zumindest einen Sperrschicht ein Streifen, der keine Sperrschicht aufweist. Bei der mittigen Anordnung der zumindest einen Sperrschicht, sind die Streifen, die beidseitig zwischen der zumindest einen Sperrschicht und der jeweiligen Seitenflanke gebildet werden, gleich breit.

In einer alternativen Ausführungsform ist die zumindest eine Sperrschicht außermittig zwischen den Seitenflanken angeordnet. Entsprechend sind die beiden Streifen, die beidseitig zwischen der zumindest einen Sperrschicht und der jeweiligen Seitenflanke gebildet werden, in Funktionsrichtung des Dichtbands unterschiedlich breit.

In einer weiteren alternativen Ausführungsform erstreckt sich die zumindest eine Sperrschicht ausgehend von einer Seitenflanke in Richtung der jeweils gegenüberliegenden Seitenflanke. In diesem Fall fällt ein Rand der zumindest einen Sperrschicht mit einer Seitenflanke des Dichtbands zusammen, sodass dort kein Streifen ausgebildet ist, der nicht von einer Sperrschicht bedeckt ist. Zwischen der Sperrschicht und der gegenüberliegenden Seitenflanke ist wiederum ein Streifen ausgebildet, der keine Sperrschicht aufweist.

In einer Ausführungsform umfasst das Dichtband zumindest zwei Sperrschichten, die in der Höhenrichtung des Dichtbands übereinander angeordnet sind, wobei sich die Sperrschichten abwechselnd ausgehend von einer der Seitenflanken in Richtung der jeweils gegenüberliegenden Seitenflanke erstrecken, wodurch ein in Höhenrichtung mäanderndes Dichtband gebildet wird.

Die zumindest eine Sperrschicht kann auch aus einer Mehrzahl von Sperrschichtabschnitten gebildet sein, die vorzugsweise in einer Ebene über den Querschnitt des Dichtbands verteilt angeordnet sind. Beispielsweise können auf die Oberseite einer Schaumstofflage mehrere Streifen von Sperrschichtmaterial beabstandet zueinander aufgetragen werden, bevor eine weitere Schaumstofflage dieser Oberseite zugeführt und mit dieser verbunden wird.

Das Dichtband kann auch eine Mehrzahl von Sperrschichten aufweisen, die in Höhenrichtung des Dichtbands übereinander angeordnet sind. Dabei können die Sperrschichten alle gleich nach einem der zuvor beschriebenen Ausführungsformen ausgebildet und angeordnet sein. Die Sperrschichten können aber auch innerhalb eines Dichtbands unterschiedlich ausgebildet und angeordnet sein. Beispielsweise ist eine Sperrschicht mittig zwischen den Seitenflanken angeordnet, während eine darüber liegende Sperrschicht außermittig und eine darunter liegende Sperrschicht durchgehend ausgebildet ist.

Es ist ersichtlich, dass es eine Vielzahl von Möglichkeiten gibt, die zumindest eine Sperrschicht zu gestalten und innerhalb des Dichtbands bzw. der Dichtbandrolle erfindungsgemäß anzuordnen, um die Wasserdampfdiffusionseigenschaften des Dichtbands sowie den Herstellprozess des Dichtbands beliebig zu gestalten.

Das für die erfindungsgemäße Dichtbandrolle zu verwendende Dichtband lässt sich besonders einfach herstellen. Beispielsweise kann abwechselnd eine beliebige Anzahl von Schaumstofflagen und Sperrschichten aufeinander laminiert werden, um ein geeignetes Dichtband herzustellen. Dies ist besonders einfach möglich, da, erfindungsgemäß , die zumindest eine Sperrschicht parallel zur Unterseite angeordnet ist. Es ist zudem möglich, dass die zumindest eine Sperrschicht senkrecht zu den Seitenflanken des Dichtbands angeordnet wird.

Vorzugsweise weist das Dichtband eine Sperrschicht auf, die mittig zwischen der Oberseite und der Unterseite angeordnet ist. Die jeweils oberhalb und unterhalb der einen Sperrschicht angeordneten Schaumstofflagen weisen dann entsprechend dieselben Dimensionen auf, sodass die Wasserdampfdiffusion durch die jeweiligen Schaumstofflagen hindurch und somit durch die mittels der Sperrschicht gebildeten Dichtbandabschnitte hindurch möglichst gleichmäßig ist.

In einer Ausführungsform ist die zumindest eine Sperrschicht in einem abgewickelten Zustand des Dichtbands schräg zu den Seitenflanken angeordnet. Folglich ist die zumindest eine Sperrschicht in diesem Fall auch schräg bezüglich der Oberseite und der Unterseite des Dichtbands angeordnet. Dadurch wird erreicht, dass die zumindest eine Sperrschicht nicht nur eine Wasserdampfdiffusion innerhalb des Dichtbands in Höhenrichtung desselben beeinflusst, sondern auch eine Wasserdampfdiffusion durch das Dichtband in Funktionsrichtung beeinflusst.

In einer Ausführungsform umfasst das Dichtband eine Mehrzahl von Sperrschichten, die zwischen der Oberseite und der Unterseite des Dichtbands verteilt sind. Besonders bevorzugt ist die Mehrzahl von Sperrschichten gleichmäßig über die Höhe des Dichtbands zwischen der Oberseite und der Unterseite des Dichtbands verteilt. Auf diese Weise können noch kleinere Abschnitte des Dichtbands gebildet werden, die jeweils durch eine Sperrschicht voneinander getrennt sind. Die Auswirkung von Inhomogenitäten des Schaumstoffs auf die Wasserdampfdiffusion innerhalb des Dichtbands wird dadurch lokal weiter eingegrenzt. Zudem werden die Schaumstofflagen gleichmäßig ausgebildet und die Wasserdampfdiffusion in Funktionsrichtung durch das Dichtband erfolgt gleichmäßig.

Um die Abschnitte, auf die sich Inhomogenitäten des Schaumstoffs auswirken, weiter zu begrenzen, kann das Dichtband auch eine Mehrzahl innenliegender Sperrschichten aufweisen, die sich in einer Ebene senkrecht zur Längsrichtung des Dichtbands und somit parallel zur Funktionsrichtung des Dichtbands erstrecken. Dadurch bilden diese Sperrschichten eine Mehrzahl von Dichtbandabschnitten, die in Längsrichtung des Dichtbands hintereinander angeordnet sind und zwischen denen jeweils eine Sperrschicht angeordnet ist. Eine Wasserdampfdiffusion innerhalb des Dichtbands in Längsrichtung kann durch diese Sperrschichten unterbunden bzw. beeinflusst werden. Die Sperrschichten sind vorzugsweise senkrecht zu den Seitenflanken und senkrecht zur Unterseite des Dichtbands angeordnet.

Um den Effekt weiter zu verstärken, weist das Dichtband in einer möglichen Ausführungsform der erfindungsgemäßen Dichtbandrolle auch solche Sperrschichten auf, die vorzugsweise zumindest eine Seitenflanke des Dichtbands bedecken und/oder parallel zu den Seitenflanken im Inneren des Dichtbands angeordnet sind und in Längsrichtung des Dichtbands verlaufen. Solche innenliegenden und in Längsrichtung verlaufenden Sperrschichten teilen das Dichtband in eine Mehrzahl von quer zur Längsrichtung nebeneinander angeordnete Dichtbandstreifen. Diese Sperrschichten unterbinden oder beeinflussen die Wasserdampfdiffusion im Dichtband und durch das Dichtband hindurch in Funktionsrichtung des Dichtbands.

In einer vorteilhaften Ausführungsform weist das Dichtband eine Drainageschicht zum Erfassen und zielgerichteten Ableiten von Wasser aus dem Dichtband auf. Wasser, das beispielsweise durch Schlagregen unerwünscht in das Dichtband gelangt, kann dadurch wieder aus dem Dichtband abgeleitet werden. Ein feuchtes Dichtband bzw. ein feuchter Bereich des Dichtbands würde nachteilig zu einer Erhöhung der Wärmeleitfähigkeit und entsprechend zu einer niedrigeren Wärmedämmung durch das Dichtband führen. Die Drainageschicht kann einen Schaumstoffstreifen umfassen oder durch eine Sperrschicht, bevorzugt eine parallel zu den Seitenflanken des Dichtbands verlaufende Sperrschicht, gebildet werden.

Eine Sperrschicht kann beispielsweise mehrlagig ausgebildet sein, wobei eine Lage eine Drainageschicht bildet, die dazu geeignet ist, eindringendes Wasser abzuleiten. Die Drainageschicht kann z. B. eine Membran- und/oder Vliesschicht aufweisen. Die Drainageschicht kann aber auch aus einem Schaumstoff gebildet sein. Beispielsweise umfasst das Dichtband dann zumindest drei quer zur Längsrichtung nebeneinander angeordnete Dichtbandstreifen, von denen zumindest einer, vorzugsweise ein innerer Dichtbandstreifen, als Drainageschicht ausgebildet ist. Die Drainageschicht weist dann einen zumindest überwiegend offenzelligen Schaumstoff auf, der Wasser aufnehmen und der Schwerkraft folgend durch die offenen Poren ableiten kann. Durch die Verwendung eines Schaumstoffs werden zugleich die dämmenden Eigenschaften des Dichtbands kaum negativ beeinflusst. Zusätzlich kann die Drainageschicht auch hier eine Vliesschicht aufweisen.

Erfindungsgemäß sind die hierin beschriebenen Sperrschichten aus einem Folienstreifen gebildet. Solche Sperrschichtmaterialien lassen sich besonders einfach und gut kontrollierbar auf den Schaumstoff bzw. die Schaumstofflagen des Dichtbands aufbringen und mit diesen verbinden. Zudem eignen sich diese Materialien besonders gut als Sperrschichtmaterial, da sich ihre Dichteigenschaften gezielt einstellen lassen.

Erfindungsgemäß sind die hierin beschriebenen Sperrschichten aus einer Folie aus Polyamid, Polyurethan, Polypropylen oder Copolymeren davon gebildet.

Die Sperrschichten können auch feuchtvariabel ausgebildet sein, d. h. ihr Wasserdampfdiffusionswiderstand ändert sich in Abhängigkeit von der Luftfeuchtigkeit der Umgebung der Sperrschicht. Kennzeichnend für den Wasserdampfdiffusionswiderstand ist der Wasserdampfdiffusionswert bezogen auf eine Luftschichtdicke in Metern, der sogenannte SD-Wert. Vorzugsweise weist eine Sperrschicht einen sD-Wert von 0,05 m bis 100 m, mehr bevorzugt von 0,1 m bis 25 m oder von 0,2 m bis 15 m auf (bei 25% relativer Luftfeuchtigkeit (rel. LF)). Die Prüfung des sD-Wertes erfolgt nach DIN EN ISO 12572. Unabhängig hiervon oder in Kombination hiermit kann eine Sperrschicht einen sD-Wert von 0,02 m bis 10 m oder 0,03 m bis 6 m oder 0,05 m bis 2 m bei 72,5% rel. LF aufweisen, gemäß DIN EN ISO 12572. Beispielsweise kann der sD-Wert bei 25% rel. LF im Bereich von 1 bis 10 m und bei 72,5% rel. LF im Bereich von 0,1 bis 5 m liegen. Sofern nach DIN EN ISO 12572 nichts anderes bestimmt, beziehen sich die sD-Werte auf eine Temperatur von 20°C.

Der sD-Wert einer Sperrschicht bei 25% einerseits und bei 72,5% relativer Luftfeuchtigkeit andererseits (jeweils bei 20°C) unterscheidet sich vorzugsweise um einen Faktor von ≥ 1,1-1,2, vorzugsweise ≥ 1,5-2, gegebenenfalls bis zu einem Faktor von 3 bis 5 oder bis 10 bis 20 oder auch bis 50 oder bis 100 oder 150 oder darüber hinaus, wodurch die Abhängigkeit der Wasserdampfdiffusion der Sperrschicht von der Luftfeuchtigkeit definiert wird. Die Differenz beider sD-Werte der Sperrschicht bei den beiden angegebenen relativen Luftfeuchtigkeiten kann ≥ 0,25 m oder ≥ 0,5 m oder vorzugsweise ≥ 0,75-1 m betragen, beispielsweise bis zu 5-10 m oder bis zu 20-25 m oder darüber hinaus. Hierdurch ergibt sich bei verschiedenen Umgebungsbedingungen, beispielsweise im Sommer oder Winter oder in unterschiedlichen Klimazonen, eine ausreichende Abhängigkeit des Wasserdampfdiffusionswiderstandes, um auch bei unterschiedlicher relativer Luftfeuchtigkeit der Umgebung eine ausreichende Anpassung des Wasserdampfdiffusionswiderstandes an die Umgebungsbedingungen zu erzielen. Der sD-Wert bei 25% rel. Luftfeuchtigkeit ist hierbei vorzugsweise jeweils der höhere Wert gegenüber dem bei 72,5% Luftfeuchtigkeit. Vorzugsweise bestehen die Sperrschichten mindestens teilweise aus einem synthetischen, wasserquellbaren Polymer.

Eine Sperrschicht weist eine Dicke von 1 bis 500 µm oder 2 bis 250 µm, besonders bevorzugt im Bereich von 5 bis 100 µm oder 5 bis 50 µm.

Die Sperrschichten können auch mehrlagig, insbesondere als eine mehrlagige Verbundschicht ausgebildet sein. Ein- oder beidseitig der Funktionsschicht kann jeweils mindestens eine Lage mindestens eines weiteren Materials angeordnet sein. Die eine oder beiden weiteren Lagen, welche die Funktionsschicht jeweils teilweise oder vollständig bedecken, können diese schützen und tragen bzw. unterstützen und die Stabilität der Sperrschichten erhöhen. Die einzelnen Lagen können jeweils aus gleichem oder verschiedenem Material bestehen.

Die ein- oder beidseitig angeordneten Lagen können insbesondere Vliese, Gewebe oder Gitter aus inerten Stoffen wie Polyethylen, Polyurethan, Polypropylen, Polyester, Glasfasern oder Viskose sein, gegebenenfalls auch perforierte Folien, insbesondere solche aus Polyethylen, Polyurethan, Polypropylen oder Polyester. Die Schichten können allgemein aus jedem geeigneten Material bestehen, welches in Schichtform vorliegt und vorzugsweise keine höheren sD-Werte hat als die Funktionsschicht. Die ein- oder beidseitig angeordneten Lagen können aus einem Dispersionsklebstoff bestehen, insbesondere einem Acrylatkleber.

Die Dicke der die Funktionsschicht umgebenden Schichten der Sperrschichten können insgesamt je Seite unabhängig voneinander eine Dicke von 10-2.000 µm, vorzugsweise 10-500 µm, insbesondere 10-250 µm, besonders bevorzugt 10-90 µm betragen.

Die Sperrschichten bilden allgemein im Rahmen der Erfindung vorzugsweise eine durchgehend, nicht poröse und nicht-perforierte Schicht, besonders bevorzugt ist diese mindestens im Wesentlichen luftundurchlässig. Die Luftdurchlässigkeit der Sperrschichten bzw. Sperrlagen liegt vorzugsweise im Bereich von 0,01-50 l/(m²s), mehr bevorzugt im Bereich von 0,01-20 l/(m²s). Bevorzugt beträgt die Luftdurchlässigkeit ≤ 3-6 l/(m²s) oder vorzugsweise ≤ 1-2 l/(m²s) oder ≤ 0,2-0,5 l/(m²s) oder besonders bevorzugt ≤ 0,1-0,3 l/(m²s) nach DIN EN ISO 9237; Prüffläche 100 cm² bei einem Messdruck (Unterdruck) von 1,0 mbar, Prüfgerät Frank 21443, oder ist nicht mehr messbar.

Entscheidend für die Luftdurchlässigkeit eines Dichtbandabschnitts ist generell die gesamte Reduktion eines Luftstroms in einer Richtung über den gesamten Querschnitt des Dichtbandabschnitts. Sind beispielsweise in Höhenrichtung oder in Funktionsrichtung des Dichtbands eine Mehrzahl von Sperrschichten und Dichtbandlagen oder -streifen abwechselnd angeordnet, ist die Reduktion des Luftstroms durch all diese Sperrschichten und Dichtbandstreifen zu berücksichtigen. Die Luftdurchlässigkeit des gesamten Dichtbands in Funktionsrichtung ist vorzugsweise kleiner als 50 l/(m²s), mehr bevorzugt kleiner als 30 l/(m²s), unter den oben angegebenen Messbedingungen.

In einer Ausführungsform umfasst das Dichtband bzw. die Dichtbandrolle weiterhin ein Zusatzmaterial, das auf eine Fläche des Dichtbands oder auf eine Sperrschicht aufgebracht ist oder im Imprägnat des Schaumstoffs enthalten ist. Das Zusatzmaterial kann dem Dichtband spezielle Eigenschaften verleihen. Als Zusatzmaterial kommen insbesondere Materialien zum Brandschutz (z.B. Blähgraffit, nicht brennbare Festkörper, CO₂-Emitter etc.), Materialien zur Isolierung (z.B. PU-Schaum, Harze, Dichtstoffe, etc.), Materialien zur Abdichtung gegen Feuchte (z.B. hydrophobe oder hydrophile Substanzen, bei Kontakt mit Wasser aufquellende Substanzen, etc.), Materialien zur Schallisolierung, Materialien zur kontrollierten Belüftung (z.B. Katalysatoren, etc.), Materialien für die Hygiene (z.B. Desinfektionsmittel, etc.) und/oder Materialien zur Auslösung der Expansion des Dichtbands (z.B. Treibmittel, Wärmequellen, etc.) in Frage. Dem Fachmann sind hier sowohl bezüglich der Anordnung sowie der Art und Eigenschaften des Zusatzmaterials Alternativen ersichtlich, die zum Erfüllen der jeweiligen Anforderungen einsetzbar sind.

Der Schaumstoff des Dichtbands kann aus jedem beliebigen offenzelligen oder geschlossenzelligen Weichschaumstoff gebildet sein, zum Beispiel aus Polyurethan, Polyethylen, Polyvinylchlorid oder Polypropylen, und kann für eine verzögerte Rückstellung nach Kompression imprägniert sein. Das Raumgewicht derartiger Weichschaumstoffe liegt zwischen 20 und 200 kg/m³.

Die einzelnen Schaumstofflagen des Dichtbands bestehen vorzugsweise aus demselben Material. Alternativ können die Schaumstofflagen aus unterschiedlichen Materialien gebildet sein.

Vorzugsweise weist der Weichschaum eine Stauchhärte von mehr als 2 kPa auf. Bevorzugt liegt die Stauchhärte bei mehr als 2,1 kPa, mehr bevorzugt bei mehr als 2,2 kPa, besonders bevorzugt bei mehr als 2,3 kPa. Die Stauchhärte beträgt vorzugsweise weniger als 4 kPa, bevorzugt weniger als 3,8 kPa und mehr bevorzugt weniger als 3,6 kPa. Die Stauchhärte ist ein Maß für die Festigkeit des Schaumstoffes. Die hier angegebenen Werte sind dabei auf eine Kompression von 40% gegenüber der Ausgangshöhe bezogen Die Stauchhärte wird bestimmt nach DIN EN ISO 3386, es wird der CV40 angegeben.

Die Dichtbänder werden vorzugsweise zur verzögerten Rückstellung wenigstens teilweise und bevorzugt vollständig mit einem Imprägniermittel imprägniert. Das Imprägniermittel weist vorzugsweise eine Acrylatdispersion auf. Bei einer vorteilhaften Ausführungsform weist die Acrylatdispersion in homogener Phase dispergierte Acrylatpolymerteilchen auf. Besonders bevorzugt ist der Schaumstoff mit einem Gewichtsanteil an Acrylatdispersion zur verzögerten Rückstellung derart imprägniert, dass das Dichtband bei 20°C und 50% relativer Luftfeuchtigkeit eine Rückstellung in weniger als 24 Stunden von einem Kompressionsgrad des Dichtbandes von ca. 9% bis 13% bis zum Fugenverschluss aufweist.

Bevorzugt weist ein zur verzögerten Rückstellung imprägnierter Schaumstoff eine Luftdurchlässigkeit in einem Bereich von 50 bis 1.000 l/(m²s), mehr bevorzugt zwischen 60 und 600 l/(m²s) und besonders bevorzugt zwischen 80 und 400 l/(m²s) auf. Die im Rahmen dieser Anmeldung getätigten Angaben zur Luftdurchlässigkeit beziehen sich auf eine Bestimmung unter den Normbedingungen eines 10 mm dicken Schaumstückes (vollständig entspannt) bei einem Messunterdruck von 1,0 bar, Prüffläche 100 cm²; Frank-Gerät 21443; DIN ISO 9237.

Schließlich ist es von Vorteil, dass die Unterseite des Dichtbands eine Klebeschicht zur Verbindung des Dichtbands mit einem Rahmenelement aufweist. Die Klebeschicht ist dadurch parallel zur zumindest einen Sperrschicht angeordnet. Die Unterseite des Dichtbands ist im zur Dichtbandrolle aufgewickelten Zustand radial nach außen gerichtet. Das Dichtband lässt sich dadurch entlang eines Rahmenelements abrollen und schnell mittels der Klebeschicht an diesem befestigen. Die Klebeschicht ist vorzugsweise als doppelseitiges Klebeband ausgebildet, das auf einer Außenseite mit einer abziehbaren Schutzfolie bedeckt ist. Die Klebeschicht kann zusätzlich oder alternativ auch auf der Oberseite des Dichtbands ausgebildet sein. Das Dichtband kann mittels der Klebeschicht auch mit der Gebäudemauer anstelle des Rahmenelements verbunden werden.

Weitere Merkmale und Vorteile der vorliegenden Erfindung ergeben sich aus der nachfolgenden Beschreibung unter Bezugnahme auf die Zeichnungen.
- Fig. 1: zeigt eine Ausführungsform einer erfindungsgemäßen Dichtbandrolle in einer isometrischen Ansicht; und
- Fig. 2a-d: zeigen eine Einbausituation verschiedener Ausführungsformen eines Dichtbands der erfindungsgemäßen Dichtbandrolle in einer Querschnittsansicht.

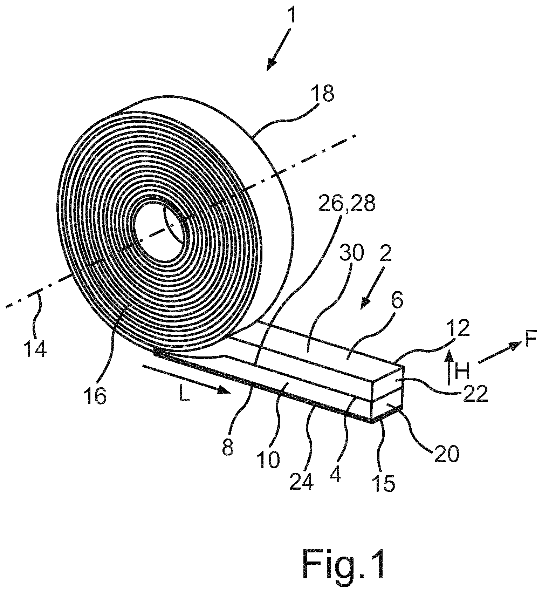

Fig. 1 zeigt eine erfindungsgemäße Dichtbandrolle 1 in einer isometrischen Ansicht. Die Dichtbandrolle 1 umfasst ein aufgewickeltes Dichtband 2. Das Dichtband 2 ist in Fig. 1 zur besseren Veranschaulichung seiner Bestandteile teilweise von der Dichtbandrolle 1 abgewickelt dargestellt, wobei ein bezüglich der Dichtbandrolle 1 äußeres Ende des Dichtbands 2 nicht zur Dichtbandrolle 1 aufgewickelt ist. Wie zu erkennen ist, ist das Dichtband 2 komprimiert zur Dichtbandrolle 1 aufgewickelt, um eine platzsparende Lagerung der Dichtbandrollen 1 zu ermöglichen. Das Dichtband 2 kann zur verzögerten Rückstellung imprägniert sein. Der nicht zur Dichtbandrolle 1 aufgewickelte Teil des Dichtbands 2 ist in Fig. 1 in einem vollständig expandierten Zustand dargestellt. Die Dicke des Dichtbands 2 im expandierten Zustand beträgt üblicherweise das 2-fache bis 20-fache der Dicke des Dichtbands 2 im komprimierten Zustand in der Dichtbandrolle 1.

Das Dichtband 2 besteht aus weichem, komprimierbarem Schaumstoff und umfasst zumindest eine innenliegende Sperrschicht 4. In der dargestellten Ausführungsform umfasst das Dichtband 2 genau eine Sperrschicht 4. Das Dichtband 2 kann aber auch eine Mehrzahl von Sperrschichten 4 aufweisen. Ferner weist das Dichtband 2 eine Oberseite 6, eine Unterseite 8 und zwei die Oberseite 6 und die Unterseite 8 verbindende Seitenflanken 10, 12 auf. Eine Längsrichtung L des Dichtbands 2 ist parallel zur Unterseite 8 und zu den Seitenflanken 10, 12 ausgerichtet. Im abgewickelten Zustand des Dichtbands 2 liegt dieses auf einer ebenen Oberfläche, beispielsweise auf einer Außenseite eines Rahmenelements auf, wobei in diesem Zustand die Seitenflanken 10, 12 senkrecht zur Oberseite 6 und zur Unterseite 8 ausgerichtet sind und sich das Dichtband 2 in einem vollständig expandierten Zustand befindet. Im komprimierten Zustand des Dichtbands 2 weisen die Seitenflanken 10, 12 eine geringere Höhe auf als im expandierten Zustand des Dichtbands 2. D. h., dass der Abstand zwischen der Oberseite 6 und der Unterseite 8 im komprimierten Zustand geringer ist als im expandierten Zustand. Der Abstand zwischen den Seitenflanken 10, 12 bleibt beim Komprimieren des Dichtbands 2 im Wesentlichen unverändert.

Das Dichtband 2 ist um eine Achse 14, die sich senkrecht zur Längsrichtung L und senkrecht zu den Seitenflanken 10, 12 des Dichtbands 2 erstreckt, zur Dichtbandrolle 1 aufgewickelt. In der Dichtbandrolle 1 liegt die Oberseite 6 einer Windung an der Unterseite 8 einer angrenzenden Windung der Dichtbandrolle 1 an und die Seitenflanken 10, 12 des Dichtbands 2 bilden Stirnflächen 16, 18 der Dichtbandrolle 1. Die Unterseite 8 ist bezüglich der Achse 14 bzw. der Dichtbandrolle 1 radial nach außen gerichtet ist, während die Oberseite 6 des Dichtbands 2 radial nach innen gerichtet ist. Eine Mantelfläche der Dichtbandrolle 1 umfasst daher die Unterseite 8 der äußersten Windung des Dichtbands 2 der Dichtbandrolle 1.

Vorzugsweise weist die Unterseite 8 des Dichtbands 2 eine Klebeschicht 15 zur Verbindung des Dichtbands 2 mit einem Rahmenelement auf. Beispielsweise wird diese Klebeschicht 15 durch ein doppelseitiges Klebeband gebildet, das mittels einer Klebefläche an der Unterseite 8 des Dichtbands 2 befestigt ist. Eine gegenüberliegende, von der Unterseite 8 abgewandte Klebefläche des Klebebands ist mit einer Abdeckschicht bedeckt, um die Klebefläche zu schützen und ein Verkleben der einzelnen Windungen der Dichtbandrolle 1 zu vermeiden. Zur Montage des Dichtbands 2 ist eine solche Abdeckschicht von der Klebeschicht stückweise abzuziehen und die Dichtbandrolle 1 ist entlang einer Außenfläche eines Rahmenelements abzurollen. Die Abdeckschicht besteht beispielsweise aus Silikonpapier. Durch die Klebeschicht 15 wird die Unterseite 8 des Dichtbands 2 mit dem Rahmenelement verbunden. Es können auch zunächst Dichtbandstreifen von der Dichtbandrolle 1 in der benötigten Länge abgeschnitten werden, die dann am Rahmenelement befestigt werden.

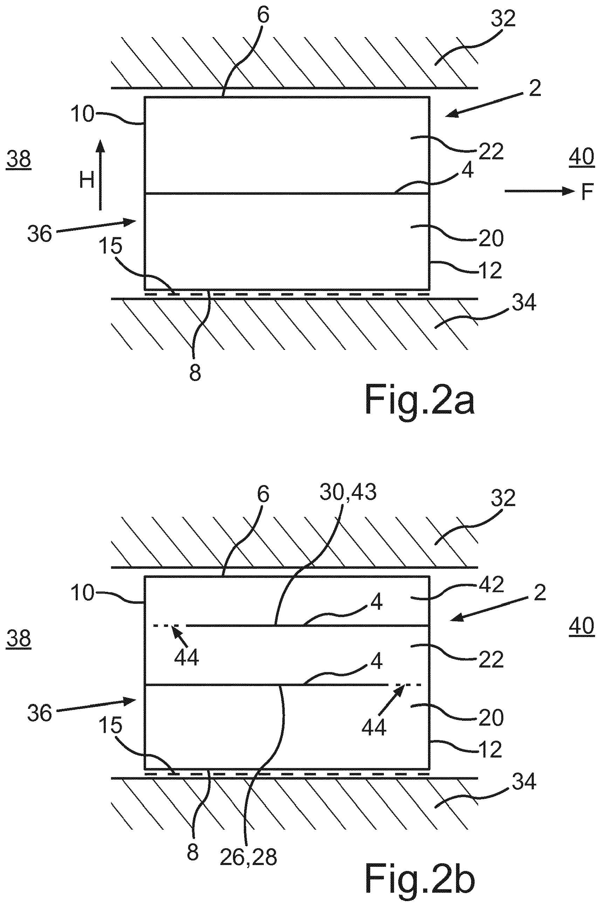

Wie der Fig. 1 zu entnehmen ist, erstreckt sich die zumindest eine Sperrschicht 4 zwischen den Seitenflanken 10, 12 der Dichtbandrolle 1 sowie in Längsrichtung L des Dichtbands 2. Das Dichtband 2 weist in der dargestellten Ausführungsform eine erste und eine zweite Schaumstofflage 20, 22 auf, die in Höhenrichtung H des Dichtbands 2 übereinander angeordnet sind. Die Höhenrichtung H ist senkrecht zur Unterseite 8 sowie parallel zu den Seitenflanken 10, 12 des Dichtbands 2 ausgerichtet. Somit ist die Höhenrichtung H senkrecht zur Längsrichtung L. Die Funktionsrichtung F ist, wie sich insbesondere aus den Fig. 2a-d ergibt senkrecht zu den Seitenflanken 10, 12 und somit sowohl senkrecht zur Längsrichtung L als auch senkrecht zur Höhenrichtung H ausgerichtet. Die zumindest eine Sperrschicht 4 erstreckt sich vorzugsweise in Funktionsrichtung F und in Längsrichtung L des Dichtbands 2.

Die Unterseite 8 des Dichtbands 2 umfasst eine Unterseite 24 der ersten Schaumstofflage 20. Eine Oberseite 26 der ersten Schaumstofflage 20 ist mit der Sperrschicht 4 versehen. Die Sperrschicht 4 kann z. B. auf die erste Schaumstofflage 20 auflaminiert sein. Auf die Oberseite 26 der ersten Schaumstofflage 22 bzw. auf die Sperrschicht 4 ist die zweite Schaumstofflage 22 aufgebracht, sodass die Oberseite 26 der ersten Schaumstofflage 20 einer Unterseite 28 der zweiten Schaumstofflage 22 zugewandt ist. Die Oberseite 6 des Dichtbands 2 umfasst dann die Oberseite 30 der zweiten Schaumstofflage 22. Auf die Oberseite 30 der zweiten Schaumstofflage 22 kann auch eine weitere Sperrschicht 4 und eine weitere Schaumstofflage aufgebracht. Auf diese Weise können Dichtbänder 2 mit einer beliebigen Anzahl an Schaumstofflagen und Sperrschichten gebildet werden.

In der dargestellten bevorzugten Ausführungsform verläuft die Sperrschicht 4 durchgehend von einer Seitenflanken 10 zur gegenüberliegenden Seitenflanke 12 des Dichtbands 2 und somit im aufgewickelten Zustand durchgehend von einer Stirnfläche 16 zur gegenüberliegenden Stirnfläche 18 der Dichtbandrolle 1. Alternative Ausführungsformen sind unter Bezugnahme auf die Figuren 2a bis 2d beschrieben. In der bevorzugten Ausführungsform ist die zumindest eine Sperrschicht 4 parallel zur Unterseite 8 des Dichtbands 2 und senkrecht zu dessen Seitenflanken 10, 12 angeordnet, um eine einfache Herstellung zu ermöglichen und die zwei Schaumstofflagen 20, 22 möglichst vollständig voneinander zu trennen.

Die Sperrschicht 4 muss sich jedoch nicht vollständig zwischen den Seitenflanken 10, 12 bzw. den Stirnflächen 16, 18 der Dichtbandrolle 1 erstrecken. In Ausführungsformen verläuft die zumindest eine Sperrschicht 4 nur teilweise zwischen den Seitenflanken 10, 12 des Dichtbands 2 bzw. den Stirnflächen 16, 18 der Dichtbandrolle 1. Um dabei dennoch die gewünschte Beeinflussung einer Wasserdampfdiffusion in Höhenrichtung H des Dichtbands 2 zwischen den Schaumstofflagen 20, 22 zu bewirken und nach Möglichkeit zu unterbinden, erstreckt sich die zumindest eine Sperrschicht 4 über mindestens 50 % der Breite der Dichtbandrolle 1 zwischen den einander gegenüberliegenden Stirnflächen 16, 18 der Dichtbandrolle 1. Die Breite der Dichtbandrolle 1 ist definiert als der Abstand der Stirnflächen 16, 18 senkrecht zu diesen, also in Richtung der Achse 14 der Dichtbandrolle 1. Die Breite des Dichtbands 2 ist definiert als der Abstand der Seitenflanken 10, 12 des Dichtbands 2 senkrecht zu diesen, also in Funktionsrichtung F des Dichtbands 2. Die Breite der Dichtbandrolle 1 entspricht im Wesentlichen der Breite des Dichtbands 2.

Es versteht sich, dass die Wasserdampfdiffusion in Höhenrichtung H umso besser beeinflusst werden kann, je weiter sich die Sperrschicht 4 über den Dichtbandquerschnitt zwischen den gegenüberliegenden Stirnflächen 16, 18 der Dichtbandrolle 1 bzw. den Seitenflanken 10, 12 des Dichtbands 2 erstreckt. Es ist daher bevorzugt, dass sich die zumindest eine Sperrschicht 4 über mindestens 75 % der Breite, noch mehr bevorzugt über mindestens 90 % der Breite der Dichtbandrolle 1 zwischen den einander gegenüberliegenden Stirnflächen 16, 18 der Dichtbandrolle 1 erstreckt.

Die Figuren 2a bis 2d zeigen jeweils einen Querschnitt durch einen Bauwerksabschnitt, um verschiedene Ausführungsformen eines Dichtbands 2 einer erfindungsgemäßen Dichtbandrolle 1 und einen Einbauzustand des Dichtbands 2 zu veranschaulichen. Der Bauwerksabschnitt umfasst eine Gebäudemauer 32, ein Rahmenelement 34 und ein Dichtband 2. Das Rahmenelement 34 ist in eine Mauerwerksöffnung der Gebäudemauer 32 eingesetzt. Zwischen den einander zugewandten Flächen der Gebäudemauer 32 bzw. der Mauerwerksöffnung und des Rahmenelements 34 ist eine Fuge 36 ausgebildet, die sich umlaufend um das Rahmenelement 34 herum und zwischen einer Rauminnenseite 38 und einer Raumaußenseite 40 erstreckt. Die Fuge 36 ist durch das Dichtband 2 abzudichten. Zur einfacheren Montage ist das Dichtband 2 vorzugsweise bereits vor dem Einsetzen des Rahmenelements 34 in die Mauerwerksöffnung am Rahmenelement 34 angebracht. Hierzu weist die Unterseite 8 des Dichtbands die Klebeschicht 15 auf, mittels derer das Dichtband 2 mit der der Fuge 36 zugewandten Außenseite des Rahmenelements 34 verbunden ist. Alternativ kann die Unterseite 8 des Dichtbands 2 auch mit der der Fuge 36 zugewandten Fläche der Gebäudemauer mittels der Klebeschicht 15 verbunden sein.

Das Dichtband 2 liegt in seinem Einbauzustand mit der Unterseite 8 flächig am Rahmenelement 34 oder der Gebäudemauer 32 an und liegt mit der Oberseite 6 entsprechend flächig am jeweils anderen aus Rahmenelement 34 und Gebäudemauer 32 an. Das Dichtband 2 ist in diesem Zustand teilkomprimiert, um ein vollständiges Anliegen am Rahmenelement 34 und der Gebäudemauer 32 zu gewährleisten. Eine Seitenflanken 10 ist der Rauminnenseite 38 zugewandt und die gegenüberliegende Seitenflanke 12 ist der Raumaußenseite 40 zugewandt. Das Dichtband 2 verläuft in Längsrichtung L (senkrecht zur Zeichenebene) um das Rahmenelement 34 herum. Im Gegensatz zu herkömmlichen Dichtbändern erstreckt sich die zumindest eine Sperrschicht 4 jedoch erfindungsgemäß in einer Ebene von der Rauminnenseite 38 zur Raumaußenseite 40 und parallel zur Längsrichtung L des Dichtbands 2, vorzugsweise auch parallel zur Funktionsrichtung F. Die zumindest eine Sperrschicht 4 bewirkt dadurch im Wesentlichen keine Dämm- oder Dichtwirkung zwischen der Rauminnenseite 38 und der Raumaußenseite 40 in Funktionsrichtung F des Dichtbands 2. Die Sperrschichten herkömmlicher Dichtbänder erstrecken sich im Gegensatz dazu von dem Rahmenelement 34 zur Gebäudemauer 32 über den gesamten Fugenquerschnitt, also von der Unterseite 8 zur Oberseite 6 sowie parallel zu den Seitenflanken 10, 12 des Dichtbands 2 und dichten Rauminnenseite gegenüber der Raumaußenseite ab. Solche Sperrschichten können zusätzlich zur zumindest einen Sperrschicht 4 vorgesehen werden.

In der Ausführungsform nach Fig. 2a weist das Dichtband 2 genau eine Sperrschicht 4 auf, die sich senkrecht zu den Seitenflanken 10, 12 des Dichtbands 2 und durchgehend von der Seitenflanke 10 zur Seitenflanke 12 erstreckt. Da die Sperrschicht 4 senkrecht zu den Seitenflanken 10, 12 ausgerichtet ist, beeinflusst sie eine Wasserdampfdiffusion in Funktionsrichtung F des Dichtbands 2 nicht. In Höhenrichtung H des Dichtbands 2 trennt die Sperrschicht 4 die erste Schaumstofflage 20 von der zweiten Schaumstofflage 22, die in Höhenrichtung H übereinander angeordnet sind. Eine Wasserdampfdiffusion innerhalb des Dichtbands 2 in Höhenrichtung H zwischen der ersten Schaumstofflage 20 und der zweiten Schaumstofflage 22 kann entsprechend nur durch die Sperrschicht 4 erfolgen. In Abhängigkeit des Wasserdampfdiffusionswiderstands der Sperrschicht 4 ist daher keine oder nur eine geringe Wasserdampfdiffusion in Höhenrichtung H in dem Umfang möglich, den die Sperrschicht 4 erlaubt. Je größer der Wasserdampfdiffusionswiderstand der Sperrschicht 4 ausgelegt wird, desto geringer ist eine Wasserdampfdiffusion in Höhenrichtung H. Um das Dichtband 2 bezüglich seiner weiteren Dämm- und Dichteigenschaften möglichst gleichmäßig zu gestalten, ist die Sperrschicht 4 vorzugsweise symmetrisch zwischen der Oberseite 6 und der Unterseite 8 angeordnet. Dadurch weisen die erste Schaumstofflage 20 und die zweite Schaumstofflage 22 im Wesentlichen dieselben Dimensionen auf. Die Sperrschicht 4 kann aber auch asymmetrisch zwischen der Oberseite 6 und der Unterseite 8 des Dichtbands 2 angeordnet sein. Das Dichtband 2 kann auch eine Mehrzahl von Sperrschichten 4 aufweisen, die über die Höhe des Dichtbands 2 verteilt zwischen der Oberseite 6 und der Unterseite 8 des Dichtbands angeordnet sind und das Dichtband 2 in eine Mehrzahl von Schaumstofflagen unterteilen.

In der Ausführungsform nach Fig. 2b umfasst das Dichtband 2 insgesamt drei Schaumstofflagen, zwischen denen jeweils eine Sperrschicht 4 angeordnet ist. Es versteht sich, dass auf diese Weise Dichtbänder 2 mit einer beliebigen Anzahl von Schaumstofflagen und Sperrschichten gebildet werden können, auf die die hierin getroffenen Aussagen entsprechend anzuwenden sind. In der dargestellten Ausführungsform umfasst das Dichtband 2 die erste Schaumstofflage 20, die zweite Schaumstofflage 22 und eine dritte Schaumstofflage 42. Zwischen den jeweils einander zugewandten Flächen der Schaumstofflagen 20, 22, 42 ist jeweils eine Sperrschicht 4 angeordnet. Hier ist eine Sperrschicht 4 zwischen der Oberseite 26 der ersten Schaumstofflage 20 und der Unterseite 28 der zweiten Schaumstofflage 22 angeordnet und eine weitere Sperrschicht ist zwischen der Oberseite 30 der zweiten Schaumstofflage 22 und der Unterseite 43 der dritten Schaumstofflage 42 angeordnet.

Erfindungsgemäß erstrecken sich die Sperrschichten 4 über mindestens 50 % der Breite des Dichtbands 2 zwischen den gegenüberliegenden Seitenflanken 10, 12 des Dichtbands 2 sowie in Längsrichtung L des Dichtbands. Bevorzugt weisen auch in diesem Ausführungsbeispiel die Schaumstofflagen 20, 22, 42 im Wesentlichen dieselben Dimensionen auf, sodass die Sperrschichten 4 gleichmäßig über die Höhe des Dichtbands 2 zwischen der Oberseite 6 und der Unterseite 8 verteilt sind. Die Schaumstofflagen 20, 22, 42 können aber auch unterschiedliche Dimensionen, insbesondere unterschiedliche Höhen bzw. Dicken in Höhenrichtung aufweisen, sodass die Sperrschichten 4 ungleichmäßig zwischen der Oberseite 6 und der Unterseite 8 des Dichtbands 2 verteilt sind. Es ist bevorzugt, dass sich die Sperrschichten 4 im Wesentlichen senkrecht zu den Seitenflanken 10, 12 erstrecken. In der dargestellten Ausführungsform erstrecken sich die Sperrschichten 4 nur über einen Teil der Breite des Dichtbands 2 zwischen den Seitenflanken 10 und 12. Die Sperrschichten 4 erstrecken sich dabei jeweils ausgehend von einer der Seitenflanken 10, 12 in Richtung der jeweils anderen Seitenflanke 10, 12. Ein Rand der Sperrschicht 4 fällt somit mit einer der Seitenflanken 10, 12 zusammen, während der in Funktionsrichtung F gegenüberliegende Rand beabstandet zur gegenüberliegenden Seitenflanke 10, 12 angeordnet ist. Zwischen dem der gegenüberliegenden Seitenflanke 10, 12 zugewandten Rand der Sperrschicht 4 und der gegenüberliegenden ist entsprechend ein Streifen 44 ausgebildet (gestrichelt dargestellt), der keine Sperrschicht aufweist.

Wird das Dichtband 2 aus einzelnen Schaumstofflagen 20, 22, 42 gebildet, die zuvor getrennt voneinander vorliegen, kann der Streifen 44 durch einen Luftspalt oder durch Klebemittel zwischen den aneinander angrenzenden Schaumstofflagen 20, 22, 42 oder einer Kombination daraus gebildet sein. Wird das Dichtband 2 aus einem einzigen Schaumstoffstreifen gebildet, in den Schnitte eingebracht werden, in die wiederum die Sperrschichten 4 eingefügt werden, kann der Streifen 44 zwischen dem einer Seitenflanke 10, 12 zugewandten Rand einer Sperrschicht 4 und dieser Seitenflanke 10, 12 auch aus einem durchgängigen Schaumstoffsteg bestehen. Es versteht sich, dass im Bereich der Streifen 44, in dem keine Sperrschicht 4 zwischen den Schaumstofflagen 20, 22, 42 vorgesehen ist, eine Wasserdampfdiffusion in Höhenrichtung H innerhalb des Dichtbands 2 im Wesentlichen ungehindert möglich ist.

Entsprechend sind die Streifen 44 möglichst klein auszubilden. Es ist daher bevorzugt, dass sich die Sperrschichten 4 jeweils über mindestens 50 %, vorzugsweise über mindestens 75% und noch mehr bevorzugt über mindestens 90 % der Breite des Dichtbands 2 zwischen den Seitenflanken 10, 12 erstrecken. Ein Streifen 44 weist bevorzugt eine Breite von höchstens 5mm, mehr bevorzugt von höchstens 2 mm, noch mehr bevorzugt von höchstens 1 mm auf. Die Sperrschichten 4 können sich auch hier durchgehend von einer Seitenflanke 10 zur anderen Seitenflanke 12 ausgebildet sein.

Um eine ungehinderte Wasserdampfdiffusion in Höhenrichtung H durch das gesamte Dichtband 2 zu erschweren, erstrecken sich die Sperrschichten 4 in der dargestellten Ausführungsform abwechselnd von einer der Seitenflanken 10, 12 in Richtung der gegenüberliegenden Seitenflanke 10, 12. So ist beispielsweise ein Streifen 44 zwischen der ersten Schaumstofflage 20 und der zweiten Schaumstofflage 22 im Bereich der rechten Seitenflanke 12 angeordnet, während ein Streifen 44 zwischen der zweiten Schaumstofflage 22 und der dritten Schaumstofflage 42 im Bereich der linken Seitenflanke 10 angeordnet ist.

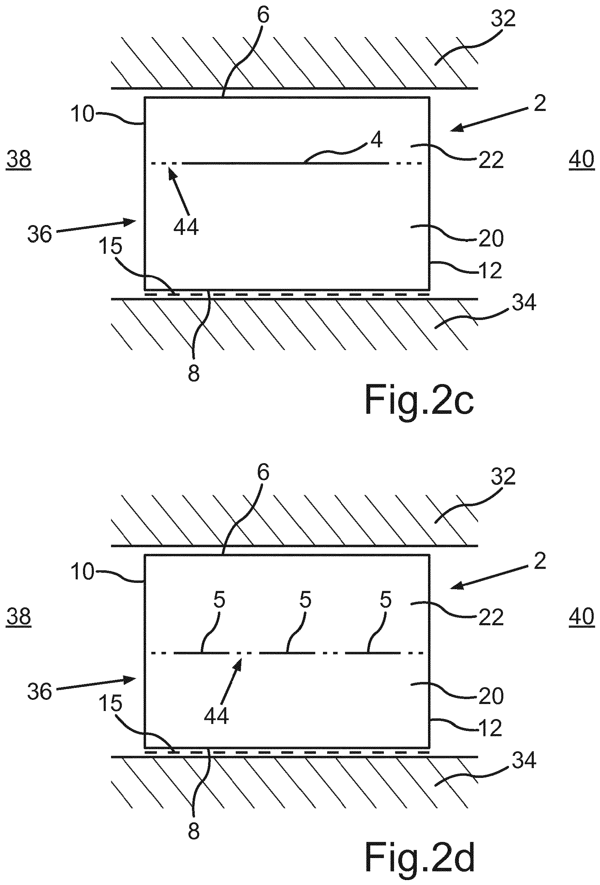

Fig. 2c zeigt ein Ausführungsbeispiel, bei dem das Dichtband 2 zumindest eine Sperrschicht 4 umfasst, die sich nur teilweise zwischen den Seitenflanken 10, 12 erstreckt und mittig zwischen den Seitenflanken 10, 12 angeordnet ist. Das Dichtband 2 kann über seine Höhe verteilt auch eine Mehrzahl solcher Sperrschichten 4 oder Sperrschichten 4 gemäß anderer Ausführungsformen umfassen. Zwischen dem den Seitenflanken zugewandten Rändern der Sperrschicht 4 ist beidseitig der Sperrschicht 4 jeweils ein Streifen 44 ohne Sperrschicht 4 ausgebildet. Die Streifen 44 sind in diesem Fall gleich breit. Um den erfindungsgemäßen Erfolg zu erzielen, erstreckt sich auch diese Sperrschicht über mindestens 50 % der Breite des Dichtbands, vorzugsweise über mindestens 75 % und mehr bevorzugt über mindestens 90 % der Breite. Wie in Fig. 2c angedeutet, ist die Sperrschicht 4 in diesem Ausführungsbeispiel nicht symmetrisch zwischen der Oberseite 6 und der Unterseite 8 sondern näher an der Oberseite 6 des Dichtbands 2 angeordnet. Entsprechend ist die Höhe der ersten Schaumstofflage 20 größer als die Höhe der zweiten Schaumstofflage 22, wobei das Größenverhältnis der Schaumstofflagen nach Belieben angepasst werden kann. Die Sperrschicht 4 gemäß dieser Ausführungsform kann jedoch auch symmetrisch zwischen der Oberseite 6 und der Unterseite 8 des Dichtbands 2 angeordnet sein.

Eine oder mehrere Sperrschichten 4 können auch außermittig zwischen den Seitenflanken 10, 12 eines Dichtbands 2 angeordnet sein. Entsprechend ist dann ein Streifen 44 zwischen einem einer Seitenflanke 10, 12 zugewandten Rand der Sperrschicht 4 kleiner als der andere Streifen 44 zwischen dem gegenüberliegenden Rand der Sperrschicht 4 und der gegenüberliegenden Sperrschicht 10, 12.

Fig. 2d zeigt eine Ausführungsform des Dichtbands 2, bei der die zumindest eine Sperrschicht 4 aus einer Mehrzahl von Sperrschichtabschnitten 5 gebildet ist, die in einer Ebene über den Querschnitt des Dichtbands 2 verteilt angeordnet sind. Die Anzahl und Größe (v.a. Breite) der Sperrschichtabschnitte 5 kann beliebig gestaltet werden. Vorzugsweise liegen die Sperrschichtabschnitte 5 in einer Ebene parallel zur Oberseite 6 und Unterseite 8 des Dichtbands, also senkrecht zu den Seitenflanken 10, 12. In Summe erstrecken sich die Sperrschichtabschnitte 5 über mindestens 50 %, vorzugsweise über 75 %, mehr bevorzugt über mindestens 90 % der Breite des Dichtbands 2. Die Sperrschichtabschnitte 5 können gleichmäßig oder ungleichmäßig über die Breite des Dichtbands 2 zwischen den Seitenflanken 10, 12 verteilt sein. Zwischen jeweils zwei nebeneinanderliegenden Sperrschichtabschnitten 5 ist ein Streifen 44 ausgebildet, der keine Sperrschicht 4 aufweist. Die Sperrschichtabschnitte 5 können beispielsweise dadurch erzeugt werden, dass auf die Oberseite 26 der ersten Schaumstofflage 20 in Längsrichtung derselben verlaufende Streifen von

Sperrschichtmaterial aufgebracht werden und schließlich die zweite Schaumstofflage 22 mit der ersten Schaumstofflage 20 verbunden wird.

Es versteht sich, dass dem Fachmann anhand der hierin beschriebenen Ausführungsformen eine Vielzahl von weiteren Gestaltungsformen einer erfindungsgemäßen Dichtbandrolle 1 ersichtlich sind. Insbesondere kann das Dichtband 2 der Dichtbandrolle eine beliebige Anzahl von Sperrschichten 4 aufweisen, wobei auch verschiedene der zuvor beschriebenen Ausführungsformen innerhalb eines Dichtbands 2 miteinander kombiniert werden können. In allen Ausführungsformen können die Sperrschichten 4 auch schräg zu den Seitenflanken verlaufen, wodurch sie auch eine Wasserdampfdiffusion in Funktionsrichtung F beeinflussen. Die Sperrschichten 4 erstrecken sich jedoch stets über mindestens 50 % der Breite des Dichtbands 2.

Es versteht sich, dass die hierin gemachten Ausführungen zu den Dichtbändern und Sperrschichten auf alle hierin beschriebenen Ausführungsformen zutreffen und einzelne Merkmale der verschiedenen Ausführungsformen beliebig miteinander kombinierbar sind, solange diese Kombinationen unter den Schutzumfang der nachfolgenden Ansprüche fallen.

## Patentansprüche

1. Dichtbandrolle (1) aus einem Dichtband (2) aus weichem, komprimierbarem Schaumstoff mit zumindest einer innenliegenden Sperrschicht (4);
wobei das Dichtband (2) eine Oberseite (6), eine Unterseite (8) und zwei die Oberseite (6) und die Unterseite (8) verbindende Seitenflanken (10, 12), eine Längsrichtung (L), die parallel zur Unterseite (8) und zu den Seitenflanken (10, 12) ausgerichtet ist, und eine Höhenrichtung (H), die senkrecht zur Unterseite (8) des Dichtbands (2) ausgerichtet ist, aufweist;
wobei das Dichtband (2) um eine Achse (14), die sich quer zur Längsrichtung (L) des Dichtbands (2) erstreckt, zur Dichtbandrolle (1) derart aufgewickelt ist, dass die Oberseite (6) einer Windung an der Unterseite (8) einer angrenzenden Windung der Dichtbandrolle (1) anliegt und die Seitenflanken (10, 12) des Dichtbands (2) Stirnflächen (16, 18) der Dichtbandrolle (1) bilden, wobei eine Breite der Dichtbandrolle (1) als der Abstand einer Stirnfläche (16) von der gegenüberliegenden Stirnfläche (18) der Dichtbandrolle (1) definiert ist;
wobei das Dichtband (2) eine Mehrzahl von Schaumstofflagen (20, 22, 42) aufweist,
die in Höhenrichtung (H) zwischen der Unterseite (8) und der Oberseite (6) des Dichtbands (2) übereinander angeordnet sind, wobei zwischen jeweils zwei aneinander angrenzenden Schaumstofflagen (20, 22, 42) die zumindest eine Sperrschicht (4) aufgenommen ist, die dazu eingerichtet ist, eine Wasserdampfdiffusion innerhalb des Dichtbands (2) quer zu einer Funktionsrichtung (F) des Dichtbands (2) zu beeinflussen, wobei die Funktionsrichtung (F) senkrecht zu den Seitenflanken (10, 12) und parallel zur Unterseite (8) des Dichtbands ausgerichtet ist;
wobei sich die zumindest eine Sperrschicht (4) über mindestens 50% der Breite der Dichtbandrolle (1) zwischen den einander gegenüberliegenden Stirnflächen (16, 18) der Dichtbandrolle (1) sowie in Längsrichtung (L) des Dichtbands (2) erstreckt; und
wobei die zumindest eine Sperrschicht (4) parallel zur Unterseite (8) angeordnet ist und eine Dicke von 1 bis 500 µm aufweist;
**dadurch gekennzeichnet, dass**
die zumindest eine Sperrschicht (4) aus einem Folienstreifen aus Polyamid, Polyurethan, Polypropylen oder Copolymeren davon gebildet ist.

2. Dichtbandrolle (1) nach Anspruch 1, **dadurch gekennzeichnet, dass** sich die zumindest eine Sperrschicht (4) zwischen den einander gegenüberliegenden Stirnflächen (16, 18) der Dichtbandrolle (1) über mindestens 75% der Breite, vorzugsweise über mindestens 90% der Breite der Dichtbandrolle (1) erstreckt.

3. Dichtbandrolle (1) nach Anspruch 1 oder 2, **dadurch gekennzeichnet, dass** die zumindest eine Sperrschicht (4) mittig zwischen den Seitenflanken (10, 12) angeordnet ist.

4. Dichtbandrolle (1) nach Anspruch 1 oder 2, **dadurch gekennzeichnet, dass** die zumindest eine Sperrschicht (4) außermittig zwischen den Seitenflanken (10, 12) angeordnet ist.

5. Dichtbandrolle (1) nach Anspruch 1 oder 2, **dadurch gekennzeichnet, dass** sich die zumindest eine Sperrschicht (4) ausgehend von einer der Seitenflanken (10, 12) in Richtung der jeweils gegenüberliegenden Seitenflanke (10, 12) erstreckt.

6. Dichtbandrolle (1) nach Anspruch 1 oder 2, **dadurch gekennzeichnet, dass** das Dichtband (2) zumindest zwei Sperrschichten (4) umfasst, die in der Höhenrichtung (H) übereinander angeordnet sind, und sich die Sperrschichten (4) abwechselnd von einer der Seitenflanken (10, 12) in Richtung der jeweils gegenüberliegenden Seitenflanke (10, 12) erstrecken.

7. Dichtbandrolle (1) nach einem der vorangehenden Ansprüche, **dadurch gekennzeichnet, dass** die zumindest eine Sperrschicht (4) aus einer Mehrzahl von Sperrschichtabschnitten (5) gebildet sein kann, die vorzugsweise in einer Ebene über den Querschnitt des Dichtbands (2) verteilt angeordnet sind.

8. Dichtbandrolle (1) nach Anspruch 1 oder 2, **dadurch gekennzeichnet, dass** sich die zumindest eine Sperrschicht (4) durchgehend von einer Stirnfläche (16) der Dichtbandrolle (1) zur gegenüberliegenden Stirnfläche (18) der Dichtbandrolle (1) erstreckt.

9. Dichtbandrolle (1) nach einem der vorangehenden Ansprüche, **dadurch gekennzeichnet, dass** die zumindest eine Sperrschicht (4) senkrecht zu den Seitenflanken (10, 12) angeordnet ist.

10. Dichtbandrolle (1) nach Anspruch 9, **dadurch gekennzeichnet, dass** die mindestens eine Sperrschicht (4) symmetrisch zwischen der Oberseite (6) und der Unterseite (8) angeordnet ist.

11. Dichtbandrolle (1) nach einem der vorangehenden Ansprüche, **dadurch gekennzeichnet, dass** das Dichtband (2) zumindest zwei Sperrschichten (4) aufweist, die zwischen der Oberseite (6) und der Unterseite (8) des Dichtbands (2) gleichmäßig über die Höhe des Dichtbands (2) verteilt sind.

12. Dichtbandrolle (1) nach einem der vorangehenden Ansprüche, **dadurch gekennzeichnet, dass** die Unterseite (8) des Dichtbands (2) eine Klebeschicht (15) zur Verbindung des Dichtbands (2) mit einem Rahmenelement (34) aufweist.

## Claims

1. A sealing tape roll (1) of a sealing tape (2) of flexible, compressible foam having at least one interior barrier layer (4);
wherein the sealing tape (2) comprises a top surface (6), a bottom surface (8), two side surfaces (10, 12) connecting the top surface (6) and the bottom surface (8) to each other, a longitudinal direction (L), which is parallel to the bottom surface (8) and to the side surfaces (10, 12), and a thickness direction (H), which is perpendicular to the bottom surface (8) of the sealing tape (2);
wherein the sealing tape (2) is wound up into the sealing tape roll (1) around an axis (14), which is arranged transversely to the longitudinal direction (L) of the sealing tape (2), in such a way that the top surface (6) of one turn rests against the bottom surface (8) of an adjacent turn of the sealing tape roll (1), and the side surfaces (10, 12) of the sealing tape (2) form end surfaces (16, 18) of the sealing tape roll (1), wherein a width of the sealing tape roll (1) is defined as the distance between one end surface (16) and the opposite end surface (18) of the sealing tape roll (1);
wherein the sealing tape (2) comprises a plurality of foam plies (20, 22, 42), which are arranged one above the other in the thickness direction (H) between the bottom surface (8) and the top surface (6) of the sealing tape (2), wherein the at least one barrier layer (4) is accommodated between a pair of adjacent foam plies (20, 22, 42); wherein the at least one barrier layer (4) is configured to impact a water vapor diffusion within the sealing tape (2) in a direction transversely to a functional direction (F) of the sealing tape (2), wherein the functional direction (F) is oriented perpendicularly to side surfaces (10, 12) and parallel to the bottom surface (8) of the sealing tape;
wherein the at least one barrier layer (4) extends over at least 50% of the width of the sealing tape roll (1) between the opposite end surfaces (16, 18) of the sealing tape roll (1) and in the longitudinal direction (L) of the sealing tape (2); and
wherein the at least one barrier layer (4) is arranged parallel to the bottom surface (8) and has a thickness of between 1 and 500 µm;
**characterized in that**
the at least one barrier layer (4) is composed of a film strip of polyamide, polyurethane, polypropylene or copolymers thereof.

2. The sealing tape roll (1) according to claim 1, **characterized in that** the at least one barrier layer (4) extends between the opposite end surfaces (16, 18) of the sealing tape roll (1) over at least 75%, preferably over at least 90%, of the width of the sealing tape roll (1).

3. The sealing tape roll (1) according to claim 1 or 2, **characterized in that** the at least one barrier layer (4) is arranged centrally between the side surfaces (10, 12).

4. The sealing tape roll (1) according to claim 1 or 2, **characterized in that** the at least one barrier layer (4) is arranged off-center between the side surfaces (10, 12).

5. The sealing tape roll (1) according to claim 1 or 2, **characterized in that** the at least one barrier layer (4) begins at one of the side surfaces (10, 12) and proceeds toward the opposite side surface (10, 12).

6. The sealing tape roll (1) according to claim 1 or 2, **characterized in that** the sealing tape (2) comprises at least two barrier layers (4), which are arranged one above the other with respect to the thickness direction (H), and wherein the barrier layers (4) proceed in alternation from one of the side surfaces (10, 12) toward the respective opposite side surface (10, 12).

7. The sealing tape roll (1) according to one of the preceding claims, **characterized in that** the at least one barrier layer (4) is formed by a plurality of barrier layer sections (5) which preferably are arranged in the same plane and distributed over the cross section of the sealing tape (2).

8. The sealing tape roll (1) according to claim 1 or 2, **characterized in that** the at least one barrier layer (4) extends continuously from one end surface (16) of the sealing tape roll (1) to the opposite end surface (18) of the sealing tape roll (1).

9. The sealing tape roll (1) according to one of the preceding claims, **characterized in that** the at least one barrier layer (4) is arranged perpendicularly to the side surfaces (10, 12).

10. The sealing tape roll (1) according to claim 9, **characterized in that** the at least one barrier layer (4) is arranged symmetrically between the top surface (6) and the bottom surface (8).

11. The sealing tape roll (1) according to one of the preceding claims, **characterized in that** the sealing tape (2) comprises at least two barrier layers (4), which are distributed uniformly over the thickness of the sealing tape (2) between the top surface (6) and the bottom surface (8) of the sealing tape (2).

12. The sealing tape roll (1) according to one of the preceding claims, **characterized in that** the bottom surface (8) of the sealing tape (2) comprises an adhesive layer (15) for bonding the sealing tape (2) to a frame element (34).

## Revendications

1. Rouleau de ruban d'étanchéité (1) comprenant un ruban d'étanchéité (2) en mousse souple compressible pourvu d'au moins une couche barrière intérieure (4) ; le ruban d'étanchéité (2) comportant une face supérieure (6), une face inférieure (8) et deux flancs latéraux (10, 12) reliant la face supérieure (6) et la face inférieure (8), une direction longitudinale (L) qui est orientée parallèlement à la face inférieure (8) et aux flancs latéraux (10, 12), et une direction en hauteur (H) qui est orientée perpendiculairement à la face inférieure (8) du ruban d'étanchéité (2) ;
le ruban d'étanchéité (2) étant enroulé autour d'un axe (14), qui s'étend transversalement à la direction longitudinale (L) du ruban d'étanchéité (2), pour former le rouleau de ruban d'étanchéité (1) de manière à ce que la face supérieure (6) d'un enroulement vienne en appui sur la face inférieure (8) d'un enroulement adjacent du rouleau de ruban d'étanchéité (1) et les flancs latéraux (10, 12) du ruban d'étanchéité (2) formant des faces frontales (16, 18) du rouleau de ruban d'étanchéité (1), une largeur du rouleau de ruban d'étanchéité (1) étant définie comme la distance d'une face frontale (16) à la face frontale opposée (18) du rouleau de ruban d'étanchéité (1) ;
le ruban d'étanchéité (2) comportant une pluralité de couches de mousse (20, 22, 42) qui sont disposées l'une au-dessus de l'autre dans la direction en hauteur (H) entre la face inférieure (8) et la face supérieure (6) du ruban d'étanchéité (2), l'au moins une couche barrière (4) étant logée à chaque fois entre deux couches de mousse adjacentes (20, 22, 42) et étant conçue pour influer sur la diffusion de vapeur d'eau à l'intérieur du ruban d'étanchéité (2) transversalement à une direction fonctionnelle (F) du ruban d'étanchéité (2), la direction fonctionnelle (F) étant orientée perpendiculairement aux flancs latéraux (10, 12) et parallèlement à la face inférieure (8) du ruban d'étanchéité ;
l'au moins une couche barrière (4) s'étendant sur au moins 50 % de la largeur du rouleau de ruban d'étanchéité (1) entre les faces frontales opposées (16, 18) du rouleau de ruban d'étanchéité (1) et dans la direction longitudinale (L) du ruban d'étanchéité (2); et
l'au moins une couche barrière (4) étant disposée parallèlement à la face inférieure (8) et ayant une épaisseur de 1 à 500 um ;
**caractérisé en ce que**
l'au moins une couche barrière (4) est formée d'un bande de film en polyamide, polyuréthane, polypropylène ou des copolymères de ceux-ci.

2. Rouleau de ruban d'étanchéité (1) selon la revendication 1, **caractérisé en ce que** l'au moins une couche barrière (4) s'étend entre les faces frontales opposées (16, 18) du rouleau de ruban d'étanchéité (1) sur au moins 75 % de la largeur, de préférence sur au moins 90 % de la largeur, du rouleau de ruban d'étanchéité (1).

3. Rouleau de ruban d'étanchéité (1) selon la revendication 1 ou 2, **caractérisé en ce que** l'au moins une couche barrière (4) est disposée au centre entre les flancs latéraux (10, 12).

4. Rouleau de ruban d'étanchéité (1) selon la revendication 1 ou 2, **caractérisé en ce que** l'au moins une couche barrière (4) est disposée de manière excentrée entre les flancs latéraux (10, 12).

5. Rouleau de ruban d'étanchéité (1) selon la revendication 1 ou 2, **caractérisé en ce que** l'au moins une couche barrière (4) s'étend depuis l'un des flancs latéraux (10, 12) en direction du flanc latéral opposé respectif (10, 12).

6. Rouleau de ruban d'étanchéité (1) selon la revendication 1 ou 2, **caractérisé en ce que** le ruban d'étanchéité (2) comprend au moins deux couches barrières (4) qui sont disposées l'une au-dessus de l'autre dans la direction en hauteur (H), et les couches barrières (4) sont disposées de manière alternée depuis l'un des flancs latéraux (10, 12) en direction du flanc latéral respectivement opposé (10, 12) .

7. Rouleau de ruban d'étanchéité (1) selon l'une des revendications précédentes, **caractérisé en ce que** l'au moins une couche barrière (4) peut être formée d'une pluralité de portions de couche barrière (5) qui sont disposées de manière répartie de préférence dans un plan sur la section transversale du ruban d'étanchéité (2) .

8. Rouleau de ruban d'étanchéité (1) selon la revendication 1 ou 2, **caractérisé en ce que** l'au moins une couche barrière (4) s'étend continûment depuis une face d'extrémité (16) du rouleau de ruban d'étanchéité (1) jusqu'à la face d'extrémité opposée (18) du rouleau de ruban d'étanchéité (1).

9. Rouleau de ruban d'étanchéité (1) selon l'une des revendications précédentes, **caractérisé en ce que** l'au moins une couche barrière (4) est disposée perpendiculairement aux flancs latéraux (10, 12).

10. Rouleau de ruban d'étanchéité (1) selon la revendication 9, **caractérisé en ce que** l'au moins une couche barrière (4) est disposée symétriquement entre la face supérieure (6) et la face inférieure (8).

11. Rouleau de ruban d'étanchéité (1) selon l'une des revendications précédentes, **caractérisé en ce que** le ruban d'étanchéité (2) comporte au moins deux couches barrières (4) qui sont réparties régulièrement sur la hauteur du ruban d'étanchéité (2) entre la face supérieure (6) et la face inférieure (8) du ruban d'étanchéité (2).

12. Rouleau de ruban d'étanchéité (1) selon l'une des revendications précédentes, **caractérisé en ce que** la face inférieure (8) du ruban d'étanchéité (2) comporte une couche adhésive (15) destinée à relier le ruban d'étanchéité (2) à un élément formant cadre (34).
